# EUROPEAN PATENT APPLICATION

(11) **EP 2 492 410 A1**
(43) Date of publication of application: **29.08.2012**
(21) Application number: 12155063.6
(22) Date of filing: 13.02.2012
(51) Int. Cl.: E04C 2/12, F16B 25/10

(54) **Prefabricated wall structure**

(30) Priority: 24.02.2011 IT PD20110054
(71) Applicant: Essetre holding SPA, 36016 Thiene VI (IT)
(72) Inventor: Sella, Andrea, 36035 Marano Vicentino VI (IT)
(74) Representative: Modiano, Micaela Nadia

(57) **Abstract**

A prefabricated wall structure (10) that comprises at least three overlaid layers (11a, 11b, 11c) of mutually adjacent wood planks (12a, 12b, 12c), first planks (12a) of the planks (12a, 12b, 12c), which form at least a first one (11a) of the layers (11a, 11b, 11c), being transverse with respect to second planks (12b, 12c) of the planks (12a, 12b, 12c), which form second layers (11b, 11c) of the layers (11a, 11b, 11c). Moreover threaded elements (13) are provided which are screwed through the layers (11a, 11b, 11c) so as to join them integrally, the threaded elements (13) being made of metallic material and/or plastic material and having a hardness that is such as not to damage tools for machining the wall (10).

## Description

The present invention relates to a prefabricated wall structure.

Nowadays, in the field of prefabricated structures for the construction of buildings, the practice is known of fitting walls that are constituted by a plurality of overlaid layers of wooden planks arranged side by side.

Such structures meet the need, increasingly felt by businesses in the field, to offer structures in the manufacture of which materials of natural origin are used.

The orientation of the planks that form the layers alternates from layer to layer, in two mutually perpendicular directions, so that each layer has planks that are transverse with respect to the ones of the adjacent layer.

For integrally joining the layers to each other, and at the same time the planks that form them, several solutions are known nowadays.

A first solution involves the use of adhesives.

This solution however is the least appreciated, since the contamination of the wood with the chemical agents present in the adhesives is perceived negatively by the customers, also because the layers of adhesive inhibit the natural breathability of the wood.

An alternative solution offered nowadays involves the use of knurled nails driven all the way through the layers, so as to hold them in place.

However, such solution has the drawback of a scant hold of the nails which, during the working of the wall assembled by means of them, for example in order to make openings therein for windows and spaces for doors, tend to slacken, compromising the cohesion and dimensional stability of the wall.

A solution currently favored involves the fixing of the layers by means of wooden pegs.

However, such a solution is difficult to implement on an industrial scale, with the consequent burden of the time and cost necessary for implementing it.

The aim of the present invention is to provide a prefabricated wall structure that is structurally solid and at the same time offers easy workability for making openings and spaces therein.

Within this aim, an object of the invention is to provide a robust prefabricated wall structure that can be worked in safety with tools adapted for working with wood.

Another object of the invention is to provide a prefabricated wall structure that is simple and easy to use, and can be made at low cost.

This aim and these and other objects which will become more apparent hereinafter are achieved by a prefabricated wall structure, **characterized in that** it comprises at least three overlaid layers of mutually adjacent wooden planks, first planks of said planks, which form at least one first layer of said layers, being transverse with respect to second planks of said planks, which form second layers of said layers, threaded elements being provided which are screwed through said layers so as to join them integrally, said threaded elements being made of metallic material and/or plastic material and having a hardness that is such as not to damage tools for machining said wall.

Further characteristics and advantages of the invention will become more apparent from the description of a preferred, but not exclusive, embodiment of the wall structure according to the invention, which is illustrated by way of non-limiting example in the accompanying drawings wherein:

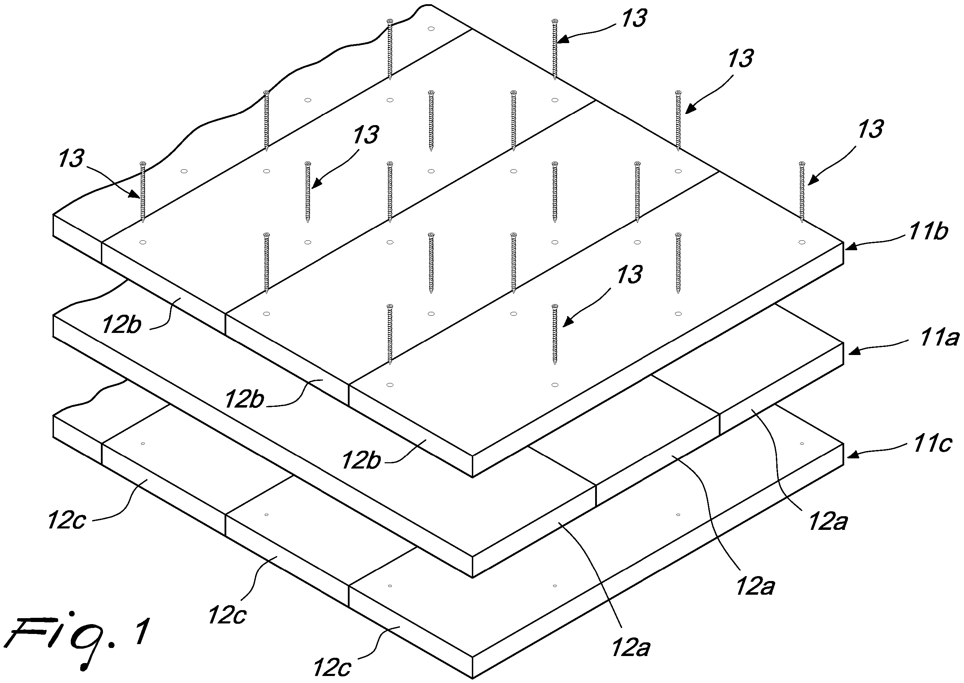

Figure 1 is an exploded perspective view of a detail of a wall having a structure according to the invention;
Figure 2 is a view of a detail of a transverse cross-section of a wall having a structure according to the invention;
Figure 3 is a view of a component of a wall having a structure according to the invention.

With reference to the figures, the reference numeral 10 generally designates a prefabricated wall the structure of which, according to the invention, has a particular peculiarity in that it comprises three overlaid layers 11a, 11b and 11c of mutually adjacent wooden planks 12a, 12b and 12c, first planks 12a of the planks 12a, 12b and 12c, which form a first layer 11a of the layers 11a, 11b and 11c, being transverse with respect to second planks 12b and 12c of the planks 12a, 12b and 12c, which form second layers 11b and 11c of the layers 11a, 11b and 11c, threaded elements 13 being moreover provided which are screwed through the layers 11a, 11b and 11c so as to join them integrally.

Advantageously, the first planks 12a, which form the first layer 11a, are oriented in a direction substantially perpendicular to the direction of orientation of the second planks 12b and 12c which form the second layers 11b and 11c, which between them embrace the first layer 11a.

According to the invention, moreover, the threaded elements 13 are made of metallic material and/or plastic material, and have a hardness that is such as not to damage tools for machining the wall 10.

In this manner, when the wall 10 is assembled, during the working thereof which is intended for example to make through spaces, for example for doors or windows, or dead spaces, for example for making runs for laying cable trays or pipes, cutting tools that should come into contact with the threaded elements 13 will not be damaged thereby.

Advantageously the metallic material is aluminum or an alloy thereof and in particular it is aluminum which is hardened and tempered so as to obtain a hardness thereof that is such as not to risk damaging tools, such as for example milling cutters, which should intercept the threaded elements 13 during working of the assembled wall 10.

In this manner, during any working of the wall 10, should a tool intercept the threaded elements 13, these being advantageously made of aluminum, the risk is avoided both of damage to the tool and of generating sparks upon contact between the tool in operation and the threaded elements 13, thus preventing the possibility of a fire being started in the planks that make up the wall 10.

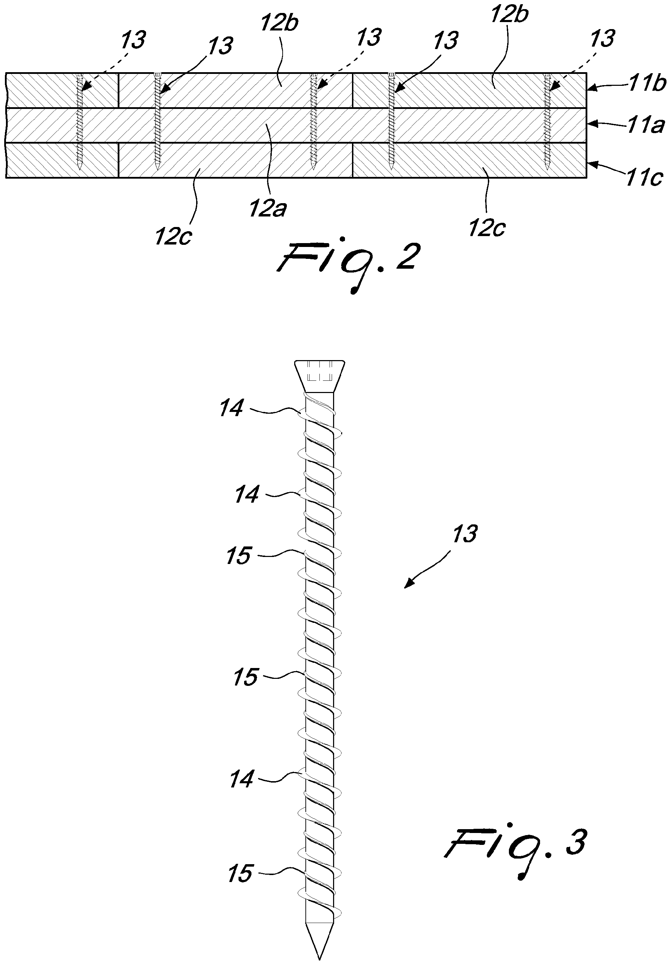

With particular reference to Figure 3, the threaded elements 13 are preferably screws with two threads 14 and 15, of which a first thread 14 has a greater radial extension than the second thread 15.

Generally, depending on the contingent requirements of implementation of a prefabricated wall according to the invention, more than three such layers, such as for example 4 or 5, can be provided.

In this case, preferably the planks that form at least one first layer of the layers are arranged transversely to the planks that form the layer, or layers, adjacent thereto.

Preferably, the first planks forming the first of such layers, alternating with second layers of such layers, are arranged transversely to the second planks that make up such second layers.

In practice it has been found that the invention fully achieves the intended aim and objects by providing a prefabricated wall structure that is structurally solid and at the same time offers easy workability for making openings and spaces, through or dead, thanks to the fact that the threaded elements effectively hold together the planks that form the overlaid layers, thus preventing their separation.

However, the presence of the threaded elements in the wall structure according to the invention does not compromise an easy workability thereof with machine tools, such as milling cutters, which are adapted to make spaces therein for openings or to perform intended machining operations thereon.

A prefabricated wall structure according to the invention is thus robust and at the same time can be worked in safety with tools for working the wood, thanks to the use of screws made of aluminum which do not generate sparks in contact with cutting tools in operation for the working of the wall.

Moreover, a prefabricated wall structure, according to the invention, is simple, easy to use and can be made at low cost.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. PD2011A000054 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A prefabricated wall structure, **characterized in that** it comprises at least three overlaid layers (11a, 11b, 11c) of mutually adjacent wood planks (12a, 12b, 12c), first planks (12a) of said planks (12a, 12b, 12c) forming at least one first layer (11a) of said layers (11a, 11b, 11c), which are transverse with respect to second planks (12b, 12c) of said planks (12a, 12b, 12c), forming second layers (11b, 11c) of said layers (11a, 11b, 11c), threaded elements (13) being provided which are screwed through said layers (11a, 11b, 11c) so as to join them integrally, said threaded elements (13) being made of metallic material and/or plastic material and having a hardness that is such as not to damage tools for machining said wall (10).

2. The prefabricated wall structure according to claim 1, **characterized in that** said metallic material is aluminum or an alloy thereof.

3. The prefabricated wall structure according to claim 2, **characterized in that** said threaded elements (13) are made of aluminum which is hardened and tempered so as to obtain a hardness thereof that is such as to avoid damage to tools for working the wood that constitutes said planks (12a, 12b, 12c).

4. The prefabricated wall structure according to claim 1, **characterized in that** said threaded elements (13) are screws with two threads (14, 15), a first thread (14) of which having a greater radial extension than the second thread (15).
